# EUROPEAN PATENT SPECIFICATION

(11) **EP 3 026 364 B1**
(45) Date of publication and mention of the grant of the patent: **13.06.2018**
(21) Application number: 15195787.5
(22) Date of filing: 23.11.2015
(51) Int. Cl.: F25B 30/02, F25B 49/02, F24H 4/02, F24H 9/20, F25B 47/02

(54) **HEAT PUMP TYPE HEATING AND HOT WATER SUPPLY APPARATUS**
WÄRMEPUMPENARTIGE HEIZ- UND HEISSWASSERVERSORGUNGSVORRICHTUNG
CHAUFFAGE DE TYPE POMPE À CHALEUR ET APPAREIL D'ALIMENTATION EN EAU CHAUDE

(30) Priority: 27.11.2014 JP 2014240308; 24.12.2014 JP 2014260621
(43) Date of publication of application: 01.06.2016
(73) Proprietor: Fujitsu General Limited, Kanagawa 213-8502 (JP)
(72) Inventor: TOMITA, Toshihisa, Kawasaki-shi, Kanagawa 213-8502 (JP); NAKAHEN, Nobutaka, Kawasaki-shi, Kanagawa 213-8502 (JP)
(74) Representative: Daub, Thomas

(56) References cited:
- EP-A1- 2 395 302
- EP-A2- 2 420 767

## Description

### TECHNICAL FIELD

The present invention relates to a heat pump type heating and hot water supply apparatus which exchanges heat between a refrigerant and water.

### BACKGROUND

Conventionally, there is known a heat pump type heating and hot water heater which, using hot water produced by exchanging heat between a refrigerant and water, performs heating and hot water supply. This heat pump type heating and hot water supply apparatus includes: a refrigerant circuit for connecting together a compressor, a four-way valve, a water refrigerant heat exchanger for performing heat exchange between a refrigerant and water, an expansion valve and a heat source-side heat exchanger sequentially to each other using a refrigerant pipe; and, a hot water supply circuit for connecting the water refrigerant heat exchanger, a circulation pump, a heating terminal (such as a floor heating panel and a bathroom heater) and a hot water supply terminal (such as a hot water storage tank and a hot water tap) to each other using a hot water supply pipe, whereby hot water heated by a refrigerant in the water refrigerant heat exchanger is circulated by driving the circulation pump through the heating terminal and hot water supply terminal to thereby perform a heating operation and a hot water supply operation (see, for example, Japan Patent Publication No. 2014-153040). From the document EP 2395302 A1 a heat-pump hot-water supplying and air conditioning apparatus according to the preamble of claim 1 is known that comprises: a heat-pump refrigerant system in which refrigerant fed by a compressor circulates in a closed-circuit refrigerant circuit having an outdoor heat exchanger and an indoor heat exchanger, undergoing repeated gas/liquid state changes, and that is capable of selecting a cooling cycle or a heating cycle by switching a circulation direction of the refrigerant that circulates in the refrigerant circuit; and a water system provided with a hot-water tank which is connected, via a flow-path switching valve, to a hot-water circulation flow path in which water fed by a pump absorbs heat from the refrigerant at the indoor heat exchanger to be turned into hot water, the hot water being circulated to be used as a hot-water heat source, wherein, in the heat-pump hot-water supplying and air conditioning apparatus that performs a defrosting operation by setting a refrigerant circulation direction in the refrigerant system to the cooling cycle, depending on a detected water temperature of hot water flowing in the water system, one of circulating hot water circulating in the hot-water circulation flow path and stored hot water stored in the hot-water tank is selected as water to be flowed to the indoor heat exchanger during the defrosting operation, and the stored hot water is selected when the detected water temperature is at or below a predetermined water temperature. From the document EP 2420767 A1a heat-pump hot water supply and air-conditioning apparatus is known, which comprises a refrigerant circuit including a compressor, a four-way switching valve, a heat-source-side air heat exchanger, a throttle mechanism, and a refrigerant/water heat exchanger, in which water is heated using refrigerant at the refrigerant/water heat exchanger to produce hot water, and when frosting occurs at the heat-source-side air heat exchanger, the refrigerant circuit is switched to a cooling cycle by using the four-way switching valve, whereby a defrosting operation is performed, wherein a bypass circuit having an electromagnetic valve that is controlled to open or close during the defrosting operation is connected in parallel to the throttle mechanism.

When a heat pump type heating and hot water supply apparatus performs a heating operation or a hot water supply operation, a compressor is controlled such that room temperature provides the target temperature (set temperature) of the heating operation to be set by a user. When a heat pump type heating and hot water supply apparatus performs a hot water supply operation, a compressor is controlled such that hot water supply temperature provides the target temperature (set temperature) of the hot water supply operation to be set by a user. Specifically, the number of rotations of the compressor is determined according to a temperature difference between the temperature (forward temperature) of water flowing to a hot water supply circuit from a water refrigerant heat exchanger after heat exchange with a refrigerant in the water refrigerant heat exchanger and a target forward temperature to be determined according to the above-mentioned set temperature. And, the compressor is driven with this number of rotations to make the forward temperature reach the target forward temperature, thereby controlling the room temperature and hot water supply temperature to provide the set temperature.

When the above-structured heat pump type heating and hot water supply apparatus performs a heating operation or a hot water supply operation under the condition of low outdoor air temperature (of 0°C or lower), there is a possibility that frost can attach to the heat source side heat exchanger to thereby worsen operation efficiency. In this case, the heat pump type heating and hot water supply apparatus performs a so called inverse cycle defrosting operation: that is, by operating a four-way valve, a refrigerant circuit is switched from a heating cycle to a cooling cycle to inverse the circulation direction of a refrigerant in the refrigerant circuit to a circulation direction in the heating operation and in the hot water supply operation, whereby the high-temperature gas refrigerant discharged from the compressor is supplied to the heat source side heat exchanger to defrost it.

During the heating operation or hot water supply operation of the heat pump type heating water heater, when defrosting operation start conditions that the heat source side heat exchanger is suspected to be frosted (for example, the temperature of the heat source side heat exchanger is 0° or lower and a state where its temperature is by 10°C or more lower than the outdoor air temperature continues 10 minutes or longer; or, 3 hours or more has passed from the previous defrosting operation and the temperature of the heat source side heat exchanger after passage of 3 hours is lower than 0°) are satisfied, the heat pump type heating water heater interrupts the heating operation or hot water supply operation and performs the inverse cycle defrosting operation. And, during the inverse cycle defrosting operation, when defrosting operation end conditions that the frost of the heat source side heat exchanger is melted completely (for example, the temperature of the heat source side heat exchanger is 10°C or higher) are satisfied, it ends the inverse cycle defrosting operation and resumes the heating operation or hot water supply operation.

When executing the inverse cycle defrosting operation during the heating operation or hot water operation in the heat pump type heating and hot water supply apparatus, in order to eliminate a pressure difference between the high and low pressures in the refrigerant circuit to prevent switching sounds occurring in the four-way valve switching time, a pressure equalizing process is performed before and after the inverse cycle defrosting operation. Specifically, when the defrosting operation start condition is satisfied during the heating operation or hot water operation, the heat pump type heating and hot water supply apparatus stops the compressor and, after passage of a specific pressure equalizing time (time necessary to eliminate the pressure difference between the high and low pressures. For example, one minute), switches the four-way valve and resume the compressor to start the inverse cycle defrosting operation. And, when the defrosting operation end condition is satisfied during the inverse cycle defrosting operation, the heat pump type heating and hot water supply apparatus stops the compressor and, after passage of the pressure equalizing time, switches the four-way valve and resumes the compressor, thereby resuming the heating operation or hot water supply operation.

During execution of the pressure equaling processing, since the compressor stops, the refrigerant does not circulate in the refrigerant circuit, whereby heat is not exchanged between the refrigerant and water in the water refrigerant heat exchanger. Therefore, the forward temperature and a return temperature, which is the temperature of the water that flows from the hot water supply circuit into the water refrigerant heat exchanger, are the same temperature. Also, the forward temperature during the inverse cycle defrosting operation, until the frost of the heat source side heat exchanger melts, continues to lower due to heat exchange between the water and refrigerant in the water refrigerant heat exchanger and, thereafter, until the defrosting operation end condition is satisfied, that is, until the temperature of the heat source side heat exchanger reaches or exceeds a specific temperature (10°C), it continues to rise. Meanwhile, the return temperature during the inverse cycle defrosting operation also changes from lowering to rising similarly to the forward temperature, but the change delays by the time while the hot water flown out from the water refrigerant heat exchanger circulates the hot water supply circuit and flows again into the water refrigerant heat exchanger.

Thus, there is a possibility that, when compared with the forward temperature which changes from lowering to rising during the inverse cycle defrosting operation, the return temperature continues lowering from end of the inverse cycle defrosting operation to resumption of the heating operation or hot water supply operation through the pressure equalizing processing. And, since, during the pressure equalizing process after end of the inverse cycle defrosting operation, the continuously lowering return temperature is the same as the forward temperature, there is a fear that the forward temperature when resuming the heating operation or hot water supply operation after end of the pressure equalizing processing can have lowered greatly when compared with the forward temperature of the heating operation or hot water supply operation before transition to the inverse cycle defrosting operation.

As described above, when resuming the heating operation or hot water supply operation in a state where the forward temperature has lowered greatly, there is a possibility that a temperature difference between the forward temperature and a target forward temperature is large; and, when resuming the compressor, the number of rotations of the compressor to be determined according to the temperature difference increases. And, when the compressor is resumed at the high rotation number to resume the heating operation or hot water supply operation, there is a fear that the forward temperature can rise excessively and exceed the target forward temperature, thereby causing excessive heating operation or excessive hot water supply operation.

### SUMMARY OF THE INVENTION

The present invention aims at solving the above problems and thus its object is to provide a heat pump type heating and hot water supply apparatus which, when resuming a heating operation or a hot water supply operation after end of an inverse cycle defrosting operation, can prevent a forward temperature against excessive rise.

In attaining the above object, the present invention provides, as a first embodiment, a heat pump type heating and hot water supply apparatus, comprising: a refrigerant circuit including a compressor, a flow passage switching device, a water refrigerant heat exchanger for exchanging heat between a refrigerant and water and a heat source side heat exchanger connected together sequentially; a hot water supply circuit for circulating hot water between a heating terminal and/or a hot water supply terminal and the water refrigerant heat exchanger by operating a circulation pump; and, a control unit for controlling the compressor. During execution of a heating operation by the heating terminal and/or a hot water supply operation by the hot water supply terminal with the refrigerant circuit set for a heating cycle and the compressor driven at a heating operation time rotation number, when a defrosting operation start condition indicating attachment of frost to the heat source side heat exchanger is satisfied, the control unit controls the flow passage switching device to switch the refrigerant circuit to a cooling cycle and drives the compressor at a defrosting operation time rotation number to execute an inverse cycle defrosting operation for defrosting the heat source side heat exchanger. And, during execution of the inverse cycle defrosting operation, when a defrosting operation end condition indicating melting of frost attached to the heat source side heat exchanger is satisfied, the control unit controls the flow passage switching device to return the refrigerant circuit to the heating cycle, and drives the compressor at the smallest rotation number to resume the heating operation and/or the water supply operation; and, the control unit continues the driving of the compressor at the smallest rotation number from start of the driving of the compressor at the smallest rotation number until passage of a smallest rotation number maintaining time necessary for a return temperature constituted of the temperature of water flowing into the water refrigerant heat exchanger to rise up to a temperature within a previously set temperature range including a return temperature when the heating operation and/or the hot water supply operation before execution of the inverse cycle defrosting operation were under execution.

Further, in attaining the above object, the present invention provides, as a second embodiment, a heat pump type heating and hot water supply apparatus, comprising: a refrigerant circuit including a compressor, a flow passage switching device, a water refrigerant heat exchanger for exchanging heat between a refrigerant and water and a heat source side heat exchanger connected together sequentially; a hot water supply circuit for circulating hot water between a heating terminal and/or a hot water supply terminal and the water refrigerant heat exchanger by operating a circulation pump; and, a control unit for controlling the compressor. During execution of a heating operation by the heating terminal and/or a hot water supply operation by the hot water supply terminal with the refrigerant circuit set for a heating cycle and the compressor driven, when a defrosting operation start condition indicating attachment of frost to the heat source side heat exchanger is satisfied, the control unit stores a heating operation time rotation number that is the rotation number of the compressor when the defrosting operation start condition is satisfied, controls the flow passage switching device to switch the refrigerant circuit to the cooling cycle, drives the compressor at a defrosting operation time rotation number to execute an inverse cycle defrosting operation to defrost the heat source side heat exchanger. And, during execution of the inverse cycle defrosting operation, when a defrosting operation end condition indicating melting of frost attached to the heat source side heat exchanger is satisfied, the control unit controls the flow passage switching device to return the refrigerant circuit to the heating operation, and drives the compressor at the heating operation time rotation number stored therein to resume the heating operation and/or the water supply operation.

The heat pump type heating and hot water supply apparatus of the first embodiment of the present invention, when resuming the heating operation and/or hot water supply operation after execution of the inverse cycle defrosting operation, drives the compressor at the smallest rotation number and maintains this rotation number for the smallest rotation number maintaining time. This can prevent the forward temperature against excessive rise.

The heat pump type heating and hot water supply apparatus of the second embodiment of the present invention, when resuming the heating operation and/or hot water supply operation after execution of the inverse cycle defrosting operation, resumes compressor at the heating operation time rotation number stored before execution of the inverse cycle defrosting operation. This can prevent the forward temperature against excessive rise.

### BRIEF DESCRIPTION OF THE DRAWINGS

Fig. 1 is a structure view of a heat pump type heating and hot water supply apparatus according to a first embodiment of the present invention.
Fig. 2 is a time chart of time variations of a forward temperature, a return temperature and the number of rotations of a compressor in the first embodiment of the present invention.
Fig. 3 is a flow chart to explain a processing to be performed by a control unit in the first embodiment of the present invention.
Fig. 4 is a time chart of time variations in a forward temperature, a return temperature and the number of rotations of a compressor in a second embodiment of the present invention.
Fig. 5 is a flow chart to explain a processing to be performed by a control unit in a second embodiment of the present invention.
Fig. 6 is a rotation number correction value table in a third embodiment of the present invention.
Fig. 7 is a time chart of time variations of a forward temperature, a return temperature and the number of rotations of a compressor in a third embodiment of the present invention.
Fig. 8 is a flow chart to explain a processing to be performed by a control unit in a third embodiment of the present invention.

### DETAILED DESCRIPTION

Description is given below specifically of a mode for executing the present invention with reference to the accompanied drawings. In the execution mode, as an example, description is given of a heat pump type heating and hot water supply apparatus which includes an indoor unit serving as a heating terminal in the present invention and a hot water storing tank serving as a hot water supply terminal in the present invention, and circulates, in the indoor unit, hot water with its heat exchanged with a refrigerant in a water refrigerant heat exchanger to thereby perform a heating operation and, using hot water with its heat exchanged with a refrigerant in the water refrigerant heat exchanger, and heats water stored within the hot water storing tank to thereby perform a hot water supply operation (which is hereinafter described as a boiling operation). Here, the present invention is not limited to the following embodiments but can be changed variously without departing from the subject matter of the present invention.

### [Embodiment 1]

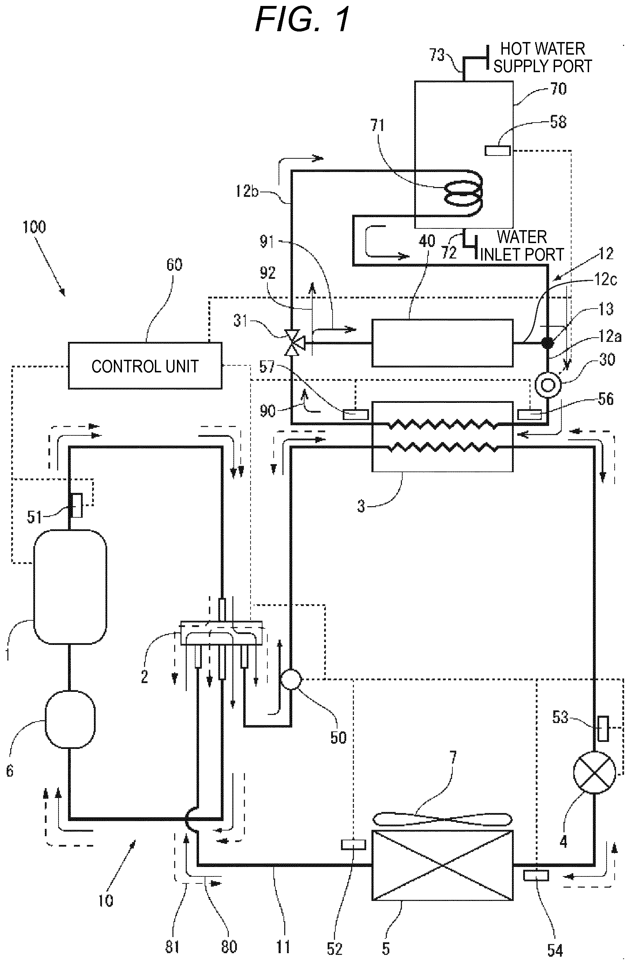

Fig. 1 shows the structure of a structure view of a heat pump type heating water heater according to the present invention. This heat pump type heating water heater 100 includes a refrigerant circuit 10 with a capacity variable type compressor 1, a four-way valve 2 serving as a flow passage switching member, a water refrigerant heat exchanger 3 for exchanging heat between a refrigerant and water, an expansion valve 4, a heat source side heat exchanger 5 and an accumulator 6 connected together sequentially by a refrigerant pipe 11 and, by switching the four-way valve 2, can switch the circulation direction of the refrigerant.

In this refrigerant circuit 10, the refrigerant pipe 11 includes, in its portion disposed adjacent to the refrigerant discharge opening of the compressor 1, a discharge temperature sensor 51 for detecting the temperature of a refrigerant discharged from the compressor 1. The refrigerant pipe 11 also includes, in its portion intervening between the water refrigerant heat exchanger 3 and expansion valve 4, a refrigerant temperature sensor 53 for detecting the temperature of the refrigerant flowing out from the water refrigerant heat exchanger 3 when it functions as a condenser, or the temperature of the refrigerant flowing into the water refrigerant heat exchanger 3 when it functions as an evaporator. The refrigerant pipe 11 also includes, in its portion intervening between the expansion valve 4 and heat source side heat exchanger 5, a heat exchange temperature sensor (heat exchange temperature detector) 54 for detecting the temperature of the refrigerant flowing into the heat source side heat exchanger 5 when it functions as a condenser, or the temperature of the refrigerant flowing out from the heat source side heat exchanger 5. The refrigerant pipe 11 further includes, in its portion existing on the side of the compressor 1 (between the four-way valve 2 and heat source side heat exchanger 5, a pressure sensor 50. Also, in the vicinity of the heat source side heat exchanger 5, there is provided an outside air temperature sensor 52 (outside air temperature detector).

Adjacently to the heat source side heat exchanger 5, there is arranged a fan 7 which takes in the outside air into a box body (not shown) of the heat pump type heating water heater 100 and circulates it to the heat source side heat exchanger 5. The fan 7 is mounted on the output shaft (rotation shaft) of a motor (not shown) capable of varying the number of rotations. Also, the expansion valve 4 is capable of pulse controlling its opening degree using a stepping motor.

The refrigerant pipe 11 and a hot water supply pipe 12a are connected to the water refrigerant heat exchanger 3. As shown in Fig. 1, one end of the hot water supply pipe 12a is connected to a three-way valve 31 to which are connected one end of an indoor unit side pipe 12c and one end of a hot water storing tank side pipe 12b. Also, the other ends of the indoor unit side pipe 12c and hot water storing tank side pipe 12b are connected to the other end of the hot water supply pipe 12a. Here, in Fig. 1, a connecting point 13 provides a connecting portion where the hot water supply pipe 12a, hot water storing tank side pipe 12b and indoor unit side pipe 12c connects together. The indoor unit side pipe 12c includes an indoor unit 40 such as a floor heater or a radiator, and the hot water storing tank side pipe 12b includes a hot water storing tank 70.

In the lower portion of the inside of the hot water storing tank 70, there is formed a spiral-shaped heat exchange part 71. The two ends of the heat exchange part 71 are connected to the hot water storing tank side pipe 12b, whereby hot water flowing in the hot water storing tank side pipe 12b is allowed to flow to the heat exchange part 71. In the upper portion of the hot water storing tank 70, there is formed a hot water supply port 73 for supplying hot water stored in the hot water storing tank 70 to a bathtub, a washstand faucet or the like. Also, in the lower portion of the hot water storing tank 70, there is formed a water inlet port 72 for supplying water to the inside of the hot water storing tank 70, while a water pipe (not shown) is directly connected to the water inlet port 72.

Between the connecting point 13 and water refrigerant heat exchanger 3, there is interposed a capacity variable type circulation pump 30. When the circulation pump 30 is driven, water having heat exchanged with the refrigerant in the circulation pump 30 circulates in the direction of the arrow 90 shown in Fig. 1. Here, the water having flown out from the water refrigerant heat exchanger 3, according to switching of the three-way valve 31, flows through the indoor unit side pipe 12c into the indoor unit 40 as shown by the arrow 91, or flows through the hot water storing tank side pipe 12b into the hot water storing tank 70 as shown by the arrow 92. And, the water having flown out from the indoor unit 40 and hot water storing tank 70 flows through the connecting point 13 into the water refrigerant heat exchanger 3.

As described above, the water refrigerant heat exchanger 3, circulation pump 30, indoor unit 40 and hot water storing tank 70 are connected together by the hot water supply pipe 12a, hot water storing tank side pipe 12b and indoor unit side pipe 12c, thereby constituting the hot water supply circuit 12 of the heat pump type heating and hot water supply apparatus 100.

On such portion of the hot water supply pipe 12a as exists on the water inlet side of the water refrigerant heat exchanger 3, there is arranged a return temperature sensor 56 (return temperature detector) for detecting the return temperature that is the temperature of water flowing into the water refrigerant heat exchanger 3. Also, on such portion of the hot water supply pipe 12a as exists on the water outlet side of the water refrigerant heat exchanger 3, there is arranged a forward temperature sensor 57 (forward temperature detector) for detecting the forward temperature that is the temperature of water flowing out of the water refrigerant heat exchanger 3. Also, substantially in the center of the inside of the hot water storing tank 70 in the vertical direction, there is arranged a hot water storing tank temperature sensor 58 for detecting the temperature of water staying inside the hot water storing tank 70.

Besides the above-mentioned structure, the heat pump type heating and hot water supply apparatus 100 includes a control unit 60. The control unit 60 performs various control relating to the operation of the heat pump type heating and hot water supply apparatus 100: for example, it inputs therein temperatures detected by the respective temperature sensors and by the pressure sensor 57, or inputs therein an operation request from a user using a remote control (not shown), and, according to them, performs drive control on the compressor 1, fan 7 and circulation pump 30, control for switching the four-way valve 2, control on the opening of the expansion valve 4, control on the switching of the three-way valve 31, and the like. Here, although not shown, the control unit 60 has a storage part for storing values detected by the various sensors, control programs and the like on the heat pump type heating and hot water supply apparatus 100.

Next, using Fig. 1, description is given of the flow of the refrigerant and the operations of the respective parts in the refrigerant circuit 10, and the flow of the hot water and the operations of the respective parts in the hot water supply circuit 10. The heat pump type heating and hot water supply apparatus 100 of this embodiment can perform a heating operation for heating a room where the indoor unit 40 is installed with the refrigerant circuit 10 functioning as a heating cycle, a boiling operation for boiling water stored in the hot water storing tank 70 with the refrigerant circuit 10 functioning as a heating cycle, and an inverse cycle defrosting operation for defrosting the heat source side heat exchanger 5 with the refrigerant circuit 10 functioning as a heating cycle during the heating operation and boiling operation.

Description is given first of the operation of the heat pump type heating water heater 100 in the heating operation, next of the operation thereof in the boiling operation, and finally of the operation thereof in the inverse cycle defrosting operation.

### <Heating operation>

When a user operates a remote control or the like of the indoor unit 40 to instruct start of the heating operation, the control unit 60 starts the circulation pump 30 at a specific rotation number and switches the three-way valve 31 to allow hot water to flow to the indoor unit side pipe 12c, whereby, as shown by the arrow 91 in Fig. 1, hot water circulates between the water refrigerant heat exchanger 3 and indoor unit 40.

The control unit 60 also switches the four-way valve 2 to switch the refrigerant circuit 10 to a heating cycle. Specifically, it switches the four-way valve 2 so that the discharge side of the compressor 1 is connected to the water refrigerant heat exchanger 3 and the suction side of the compressor 1 is connected to the heat source side heat exchanger 5. Thus, the water refrigerant heat exchanger 3 functions as a condenser and the heat source side heat exchanger 5 functions as an evaporator.

Next, the control unit 60 operates the compressor 1 and fan 7 to start the heating operation of the heat pump type heating and hot water supply apparatus 100. The control unit 60 controls the compressor 1 so that the forward temperature detected by the forward temperature sensor 57, that is, the temperature of water heated in the water refrigerant heat exchanger 3 becomes such water temperature (which is hereinafter described as a target forward temperature) as corresponds to a heating operation temperature set by a user. Specifically, the control unit 60 obtains a temperature difference between the forward temperature detected by the forward temperature sensor 57 and target forward temperature, refers to a table showing the relationship between a temperature difference previously stored in the storage part and the rotation number of the compressor 1 to determine the rotation number of the compressor 1, and drives the compressor 1 at this rotation number.

When the compressor 1 is driven, as shown by the arrow 80 in Fig. 1, the refrigerant discharged from the compressor 1 repeats a cycle in which it passes through the four-way valve 2, exchanges heat with water in the water refrigerant heat exchanger 3, is pressure reduced by the expansion valve 4, exchanges heat with the outside air in the heat source side heat exchanger 5 to evaporate, is sucked by the compressor 1 and is compressed again in the compressor 1.

Meanwhile, hot water heated through heat exchange with the refrigerant in the water refrigerant heat exchanger 3, when the circulation pump 30 is driven, flows to the hot water supply pipe 12a, flows in the indoor unit side pipe 12c through the three-way valve 31, and flows into the indoor unit 40. A room equipped with the indoor unit 40 is heated by heat radiation of the hot water flowing in the indoor unit 40. The hot water flowing out of the indoor unit 40 flows through the connecting point 13 and circulation pump 30 into the water refrigerant heat exchanger 3, where it exchanges heat with the refrigerant and is thereby heated.

### <Boiling Operation>

Next, description is given of the boiling operation. In the heating operation, the control unit 60 controls driving of the compressor 1 such that the forward temperature detected by the forward temperature sensor 57 provides the target forward temperature corresponding to the heating operation temperature set by the user. Meanwhile, in the boiling operation, the compressor 1 is controlled such that the forward temperature detected by the forward temperature sensor 57 provides a target forward temperature corresponding to a boiling temperature which is a target temperature of water stored in a hot water storing tank 70 (to be discussed later). Here, the operation of the refrigerant circuit 10 in the boiling operation is the same as the above-mentioned operation of the heating operation and thus the specific description is omitted.

Hot water stored in the hot water storing tank 70 reduces in amount when it flows out from the hot water supply port 73. As described above, since a water pipe is directly connected to the water inlet port 72, due to the pressure of the water pipe water, water is supplied from the water inlet port 72 to the hot water storing tank 70 by an amount corresponding to the reduced amount. This lowers the temperature of the hot water stored in the hot water storing tank 70.

The control unit 60 is always monitoring, as the temperature of hot water stored in the hot water storing tank 70, the hot water storing tank temperature detected by the hot water storing tank temperature sensor 58 and, when the hot water storing tank temperature obtained lowers down to or lower than the boiling start temperature lower by a predetermined specific temperature (for example, 5°C) than the boiling temperature, starts the boiling operation in order to raise the temperature of hot water storing in the hot water storing tank 70 up to the boiling temperature.

The control unit 60 starts the circulation pump 30 at a specific rotation number and also switches the three-way valve 31 so that water flows to the hot water storing tank side pipe 12b, whereby, as shown by the arrow 92 in Fig. 1, hot water circulates between the water refrigerant heat exchanger 3 and hot water storing tank 70. Hot water heated through heat exchange with the refrigerant in the water refrigerant heat exchanger 3 is allowed to flow from the water refrigerant heat exchanger 3 to the hot water supply pipe 12a due to operation of the circulation pump 30, flows through the three-way valve 31 in the hot water storing tank side pipe 12b and flows into a heat exchange part 71 disposed within the hot water storing tank 70. Water storing in the hot water storing tank 70 is heated by the hot water flowing into the heat exchange part 71. The hot water flowing out from the heat exchange part 71 flows through the connecting point 13 and circulation pump 30 into the water refrigerant heat exchanger 3, where it exchanges heat with the refrigerant and is thereby heated again.

### <Inverse Cycle Defrosting Operation>

While the heat pump type heating and hot water supply apparatus 100 of this embodiment is performing the above-mentioned heating operation or boiling operation with the refrigerant circuit 10 functioning as a heating cycle, when the defrosting operation start condition is satisfied, the inverse cycle defrosting operation for defrosting the heat source side heat exchanger 5 is executed with the refrigerant circuit 10 as a cooling cycle. Here, the defrosting operation start condition is a condition raising a fear that such degree of frost as lowers the operation efficiency of the heating operation or boiling operation is attached to the heat source side heat exchanger 5, for example, such condition is satisfied when a state, where the temperature of the heat source side heat exchanger 5 is 0°C or lower and is lower by 1°C or more than the outside air detected by the outside air temperature sensor 52, continues 10 minutes or longer, and when three hours or longer have passed since end of the previous inverse cycle defrosting operation.

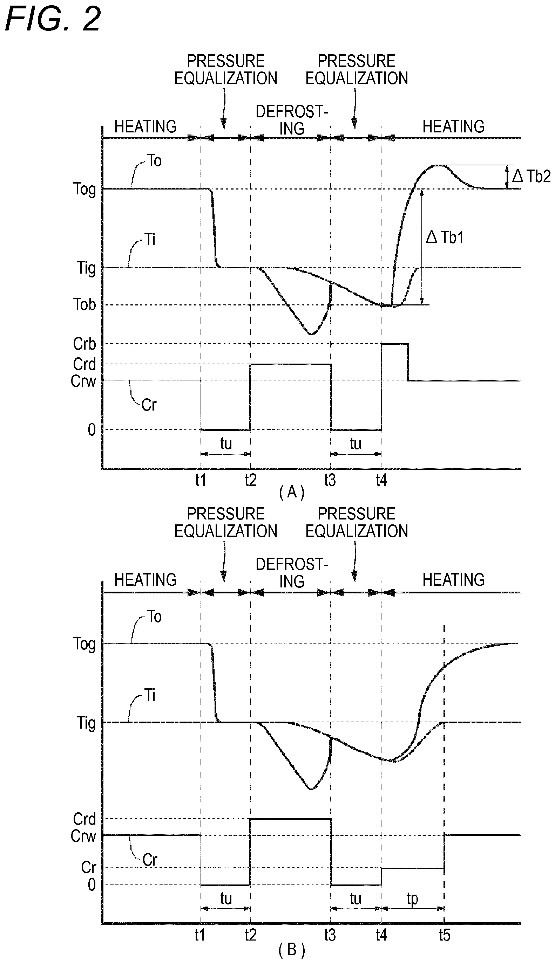

Description is given below of the operation of the heat pump type heating and hot water supply apparatus 100 in the inverse cycle defrosting operation. Here, the operation of the hot water supply circuit 12 in the inverse cycle defrosting operation is the same as that in the above-mentioned heating operation and boiling operation and thus the specific description thereof is omitted. Also, when describing the operation of the refrigerant circuit 10, Fig. 2 is also used.

Fig. 2 is a time chart of time variations in the forward temperature detected by the forward temperature sensor 57, return temperature detected by the return temperature sensor 56 and the rotation number of the compressor 1 when performing the inverse cycle defrosting operation during the heating operation or boiling operation. In Fig. 2, (A) is a time chart of control according to the prior art, whereas (B) is a time chart of control according to the present invention.

In Fig. 2, reference sign To shows a forward temperature, Ti shows a return temperature, Tog shows a target forward temperature, Tig shows a return temperature when the forward temperature To is stable as the target forward temperature Tog, Cr shows the rotation number of the compressor 1, Crw shows the rotation number of the compressor 1 (which is hereinafter described as the heating operation time rotation number) when the forward temperature To is stable as the target forward temperature Tog, Crd shows the rotation number of the compressor 1 in the inverse cycle defrosting operation time (defrosting operation time rotation number), and tu shows a pressure equalizing time necessary for pressure equalization of the refrigerant circuit 10. Also, t1 shows the time when the heating operation or boiling operation is interrupted due to satisfaction of the defrosting operation start condition during the heating operation or boiling operation, t2 shows the time for starting the inverse cycle defrosting operation after passage of a pressure equalizing time tu from t1, t3 shows a time for stopping the inverse cycle defrosting operation due to satisfaction of the defrosting operation end condition (which is described later) during the inverse cycle defrosting operation, and t4 shows a time for resuming the heating operation or boiling operation after passage of the pressure equalizing time tu from t3. Further, [heating] shows that a heating operation or boiling operation is under execution, [defrosting] shows that the inverse cycle defrosting operation is under execution, and [pressure equalizing] shows that the refrigerant circuit 10 is performing the pressure equalizing processing. Here, the pressure equalizing processing is a processing for continuing to stop the compressor 1 during the pressure equalizing time necessary to substantially equalize the high-pressure side refrigerant pressure and low-pressure side refrigerant pressure to each other in order that the refrigerant pressure on the high-pressure side (the refrigerant discharge side of the compressor 1) and the refrigerant pressure on the low-pressure side of the refrigerant circuit 10 (the refrigerant suction side of the compressor 1) of the refrigerant circuit 10 can be substantially equal to each other.

In Fig. 2(A), Tob shows a forward temperature at the time t4 when the pressure equalizing processing after end of inverse cycle defrosting operation is ended, ΔTb1 shows a temperature difference between the target forward temperature Tog and forward temperature Tob, ΔTb2 shows the maximum value of the time difference between the target forward temperature Tog and the forward temperature To exceeding the target forward temperature Tog after resumption of the heating operation or boiling operation, and Crb shows the start rotation number of the compressor 1 after resumption of the heating operation or boiling operation corresponding to the temperature difference ΔTb1. Here, the size relationship between the respective forward temperatures To is Tob<Tig<Tog. Also, the size relationship between the respective rotation numbers Cr of the compressor 1 is Crw<Crd<Crb.

In Fig. 2(B), Crm shows a rotation number lower limit value that is the smallest rotation number inherent in the compressor 1, and tp shows the time (which is described as the smallest rotation number maintaining time) from the time t4 for resuming the heating operation or boiling operation to the time t5 when the return temperature Ti rises to the return temperature Tig in the heating operation time or boiling operation time before execution of the inverse cycle defrosting operation. The smallest rotation number maintaining time tp is previously obtained by conducting a test or the like and is stored in the storage part of the control unit 60, for example 10 minutes. Here, the size relation between the respective forward temperatures To is Tig<Tog, and the size relation between the respective rotation numbers Cr of the compressor 1 is Crm<Crw<Crd.

When the defrosting operation start condition is satisfied at the time t1 during the heating operation or boiling operation of the heat pump type heating and hot water supply apparatus 100, the control unit 60 stops the compressor 1 and fan 7 to interrupt the heating operation or boiling operation and, when the pressure equalizing time tu passes from the time t1 to the time t2, it switches the four-way valve 2 such that the refrigerant circuit 10 provides a cooling cycle. Specifically, it switches the four-way valve 2 such that the discharge side of the compressor 1 is connected to the heat source side heat exchanger 5 and the suction side of the compressor 1 is connected to the water refrigerant heat exchanger 3. Accordingly, the heat source side heat exchanger 5 functions as a condenser and the water refrigerant heat exchanger 3 functions as an evaporator.

Next, the control unit 60 operates the compressor 1 to start the inverse cycle defrosting operation. It operates the compressor 1 at the defrosting operation time rotation time Crd and, during the inverse cycle defrosting operation, maintains the defrosting operation time rotation time Crd.
Also, during the inverse cycle defrosting operation, it does not drive the fan 7.

When the compressor 1 is operated at the defrosting operation time rotation number Crd with the refrigerant circuit 10 set as a cooling cycle, the refrigerant discharged from the compressor 1 passes through the four-way valve 2 and flows into the heat source side heat exchanger 5 to melt frost attached thereto. The refrigerant flowing out from the heat source side heat exchanger 5 repeats a process in which it is reduced in pressure in the expansion valve 4, exchanges heat, in the water refrigerant heat exchanger 3, with hot water circulating in the hot water supply circuit 12 to evaporate, is sucked into the compressor 1 and is compressed again by the compressor 1.

When the defrosting operation end condition is satisfied at the time t3 during the inverse cycle defrosting operation, the control unit 60 stops the compressor 1 and, at the time t4 after passage of the pressure equalizing time tu, it switches the four-way valve 2 to set the refrigerant circuit 10 in a heating cycle and resumes the compressor 1 and fan 7, thereby resuming the heating operation or boiling operation. Here, [the defrosting operation end condition] is a condition for a case where the frost attached to the heat source side heat exchanger 5 is considered to have been melted entirely, for example, a case where the temperature of the heat source side heat exchanger 5 becomes 10°C or higher, and a case where ten minutes or longer have passed since start of the inverse cycle defrosting operation at the time 2.

As described above, in the case that the inverse cycle defrosting operation is performed during the heating operation or boiling operation and, after end of the inverse cycle defrosting operation, the heating operation or boiling operation is resumed, when the heat pump type heating and hot water supply apparatus 100 controls the compressor 1 according to the prior art technology, there is a fear of occurrence of the problems to be described below.

As shown in Fig. 2(A), when the forward temperature To is stable at the target forward temperature Tog during the heating operation or boiling operation, the return temperature Ti is also stable at the temperature Tig lower by a specific temperature (for example, 5°C) than the target forward temperature Tog. When interrupting the heating operation or boiling operation and performing the inverse cycle defrosting operation at the time t1, the forward temperature To lowers down to be the same as the return temperature Ti (=Tig), whereby, in the pressure equalizing processing, the compressor 1 is caused to stop and thus, in the water refrigerant heat exchanger 3, water and refrigerant exchanges heat no longer.

When, after the pressure equalizing processing is continued until the time t2, the operation is transferred to the inverse cycle defrosting operation, the refrigerant, which has melted the frost and has been thereby cooled in the heat source side heat exchanger 5, flows into the water refrigerant heat exchanger 3 to exchange heat with the hot water, whereby the forward temperature To lowers further. The forward temperature To continues to lower until frost is melted in the heat source side heat exchanger 5 and, after frost is melted, with lowered condensing capacity of the heat source side heat exchanger 5, the temperature of the refrigerant flowing into the water refrigerant heat exchanger 3 also rises, whereby the forward temperature To continues to rise during the period which ranges from melting of frost to the end of the inverse cycle defrosting operation (to the time t3) due to satisfaction of the defrosting operation end condition.

Meanwhile, the return temperature Ti after transfer to the inverse cycle defrosting operation does not start to lower at the same time as the forward temperature To but starts to lower later than the lowering of the forward temperature To by the time while the hot water flowing out from the water refrigerant heat exchanger 3 circulates in the hot water supply circuit 12 and flows again into the water refrigerant heat exchanger 3. And, as shown in Fig. 2(A), lowering of the return temperature Ti continues also during the pressure equalizing process after end of the inverse cycle defrosting operation. This is because the indoor unit 40 and hot water storing tank 70 of the hot water supply circuit 12 are large in heat capacity, that is, the temperature-lowered hot water flowing out from the water refrigerant heat exchanger 3 takes time to cool the indoor unit 40 and hot water storing tank 70.

Thus, as shown in Fig. 2(A), in the pressure equalizing processing before resumption of the heating operation, the forward temperature To and return temperature Ti are the same temperature for similar reasons to the pressure equalizing processing before transfer to the inverse cycle defrosting operation and, as the return temperature Ti lowers, the forward temperature To also lowers. This raises a fear that the forward temperature To when resuming the heating operation or boiling operation at the time t4 can be the temperature Tob lower than the return temperature Tig in the heating operation time before execution of the inverse cycle defrosting operation.

In this state, when the control unit 60 determines the start rotation number Crb of the compressor 1 in resumption of the heating operation or in resumption of the boiling operation according to the temperature difference ΔTb1 between the target forward temperature Tog and forward temperature Tob in resumption of the heating operation, the start rotation number Crb is high (for example, 90 rps) because the temperature difference ΔTb1 is large. And, when starting the compressor 1 at the high start rotation number Crb to thereby resume the heating operation or boiling operation, as shown by ΔTb2 in Fig. 2(A), there occurs a so-called forward temperature To overshoot where the forward temperature To rises excessively to be higher than the target forward temperature Tog, thereby causing the excessive heating operation or boiling operation. This raises a fear that the energy saving characteristics of the heat pump type heating and hot water supply apparatus 100 can be lowered.

In view of the above, according to the present invention, when resuming the heating operation or boiling operation after end of the inverse cycle defrosting operation, the resumption time rotation number of the compressor 1 is not based on the temperature difference between the forward temperature To at the then time and target forward temperature Tog, but the compressor 1 is driven at the smallest rotation number Crm (for example, 20 rps) to resume the heating operation or boiling operation. And, during the smallest rotation number maintaining time tp necessary for the return temperature Ti to rise up to temperatures in a previously determined temperature range including the return temperature Tig in the heating operation time or boiling operation time before execution of the inverse cycle defrosting operation, driving of the compressor 1 at the smallest rotation number Crm is maintained. And, the rotation number of the compressor 1 is increased to the start rotation number Crb corresponding to the temperature difference between the forward temperature To taken in after passage of the smallest rotation number maintaining time tp and the target forward temperature Tog.

Here, the [previously determined temperature range including the return temperature Tig in the heating operation or boiling operation before execution of the inverse cycle defrosting operation] is a range which can satisfy the condition previously confirmed by a test or the like that the forward temperature To overshoot does not occur when the compressor 1 is resumed at the start rotation number Crb to be determined by the temperature difference between the target forward temperature Tog and the forward temperature To when the return temperature Ti becomes a temperature in the relevant temperature range. Meanwhile, like the embodiment shown in Fig. 2(B), the return temperature Ti after the pressure equalizing processing may not be the temperatures in the temperature range including the return temperature Tig, but the time necessary for the return temperature Ti to rise up to the return temperature Tig in the heating operation time or boiling operation time before execution of the inverse cycle defrosting operation may be the smallest rotation number maintaining time tp, driving of the compressor 1 at the smallest rotation number Crm may be maintained until the smallest rotation number maintaining time tp passes, and, after passage of the smallest rotation number maintaining time tp (at the time t5), the rotation number of the compressor 1 may be increased to the rotation number at the time before execution of the inverse cycle defrosting operation, that is, the heating operation time rotation number Crw that is the rotation number when the forward temperature To is stable at the target forward temperature Tog.

By controlling the rotation number of the compressor 1 in the above manner, a rise in the forward temperature To after resumption of the heating operation or boiling operation can be slackened. Specifically, like the embodiment shown in Fig. 2(B), by driving the compressor 1 with the rotation number maintained at the smallest rotation number Crm until the time t5 when the smallest rotation number maintaining time tp has passed from resumption of the heating operation or boiling operation at the time t4, a rise in the forward temperature To can be slackened when compared with driving of the compressor 1 at a high rotation number determined according to the large temperature difference ΔTb1. Also, after passage of the smallest rotation number maintaining time tp, when the return temperature Ti is Tig, the rotation number of the compressor 1 is increased to the heating operation time rotation number Crw proved to be able to maintain the forward temperature To stably at the target forward temperature Tog, thereby preventing the forward temperature To from rising excessively into overshoot.

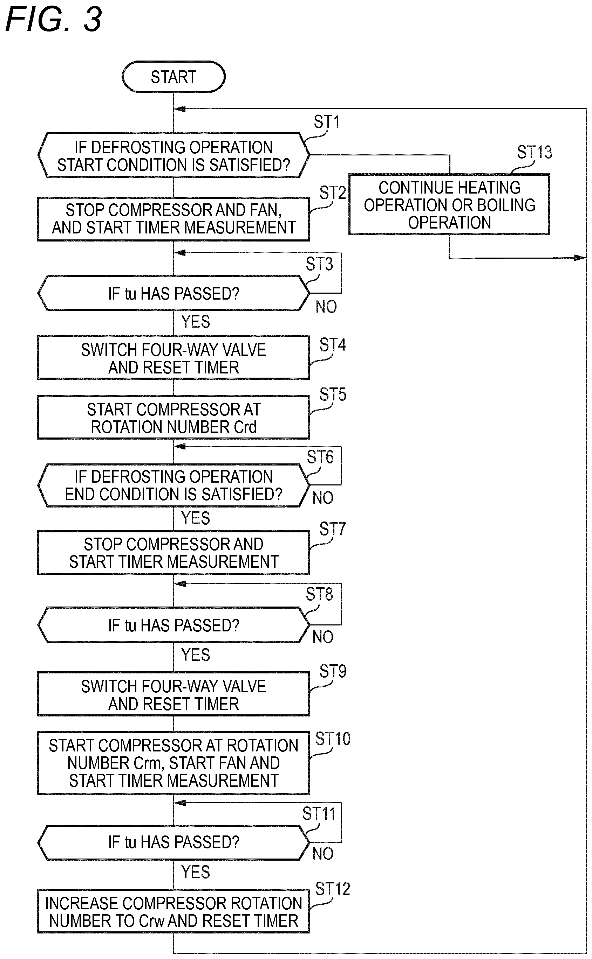

Next, using a flow chart shown in Fig. 3, description is given of control to be performed by the control unit 60 in the inverse cycle defrosting operation. A flow chart of Fig. 3 shows mainly the flow of processings relating to the control of the compressor 1 when the inverse cycle defrosting operation is performed while the heat pump type heating and hot water supply apparatus 100 is executing a heating or boiling operation and, after then, the heating or boiling operation is resumed. ST represents steps, and numerals following ST represent step numbers. Here, in Fig. 3, illustration and description of other control of the apparatus 100 than the control relating to the present invention are omitted.

The control unit 60, during the heating or boiling operation, checks whether the defrosting operation start condition is satisfied or not (ST1). For example, during the heating or boiling operation, the control unit 60 inputs therein refrigerant temperatures detected by a heat exchange temperature sensor 54, that is, the temperatures of the heat source side heat exchanger 5 at every specific time (for example, every 30 seconds) and, using the thus-input temperatures, checks whether the defrosting operation start condition is satisfied or not.

When not satisfied (ST1 - No), the control unit 60 continues the heating operation or boiling operation (ST13) and returns the processing to ST1. When satisfied (ST1 - Yes), the control unit 60 stops the compressor 1 and fan 7, and starts timer measurement (ST2).

Next, the control unit 60 checks whether a pressure equalizing time tu has passed after start of the timer measurement in ST2 or not (ST3). When not passed (ST3 - No), the control unit 60 returns the processing to ST3. When passed (ST3 - Yes), the control unit 60 switches the four-way valve 2 to switch the refrigerant circuit 10 from the heating cycle to the cooling cycle, and resets the timer (ST4).

Next, the control unit 60 drives the compressor 1 at a rotation number Crd in the inverse cycle defrosting operation time (ST5). The rotation number Crd in the inverse cycle defrosting operation time may preferably be set high in order to shorten the defrosting operation time as much as possible, for example, 70 rps. Here, as described above, the control unit 60, during the inverse cycle defrosting operation, controls the compressor 1 to maintain this rotation number Crd.

Next, the control unit 60 checks whether the defrosting operation end condition is satisfied or not (ST6). For example, during the inverse cycle defrosting operation, it inputs therein the refrigerant temperatures detected by the heat exchange temperature sensor 54, that is, the temperatures of the heat source side heat exchanger 5 every specific time (for example, every 30 seconds) and, using the thus input temperatures, checks whether the defrosting operation end condition is satisfied or not.

When not satisfied (ST6 - No), the control unit 60 returns the processing to ST6 and continues the inverse cycle defrosting operation. When satisfied (ST6 - Yes), it stops the compressor 1 and starts the timer measurement (ST7).

Next, the control unit 60 checks whether the pressure equalizing time tu has passed after start of the timer measurement in ST7 (ST8). When not passed (ST8 - No), it returns the processing to ST8. When passed (ST8 - Yes), it switches the four-way valve 2 to return the refrigerant circuit 10 from the cooling cycle to the heating cycle, and resets the timer (ST9).

Next, the control unit 60 starts the compressor 1 at the smallest rotation number Crm, starts the fan 7 and starts the timer measurement (ST10). As described above, the smallest rotation number Crm is a rotation number lower limit value inherent in the compressor 1, for example, 20 rps.

Next, the control unit 60 checks whether the minimum rotation number maintain time tp has passed after start of the timer measurement in ST10 or not (ST11). When the minimum rotation number maintaining time tp has not passed (ST11 - No), it returns the processing to ST10 and, while maintaining the rotation number of the compressor 1 at the minimum rotation number Crm, drives the compressor 1. When the minimum rotation number maintaining time tp has passed (ST11 - Yes), it increases the rotation number of the compressor 1 to a heating operation time rotation number Crw, resets the timer and returns the processing to ST1.

As described above, the heat pump type heating and hot water supply apparatus of the present invention, when resuming the heating operation and/or hot water supply operation after the inverse cycle defrosting operation, starts the compressor at the smallest rotation number and maintains this rotation number for the smallest rotation number maintaining time. This can prevent the forward temperature against excessive rise.

Here, in the above embodiment, description has been given of an example where the smallest rotation number of the compressor 1 is the rotation number lower limit value inherent in the compressor 1. However, this is not limitative but there may also be used the rotation number that is higher than the above-mentioned rotation number lower limit value and is lower than the heating operation time rotation number Crw, so long as it has been confirmed previously by a test or the like that the forward temperature To is prevented against sudden rise.

### [Embodiment 2]

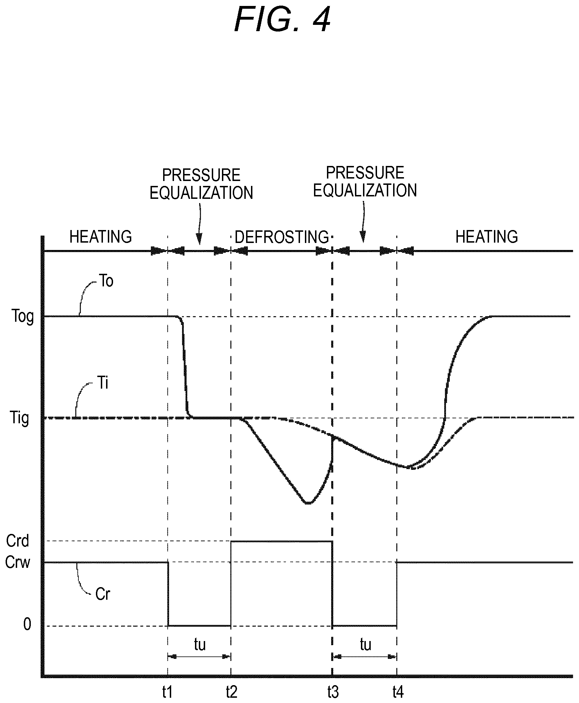

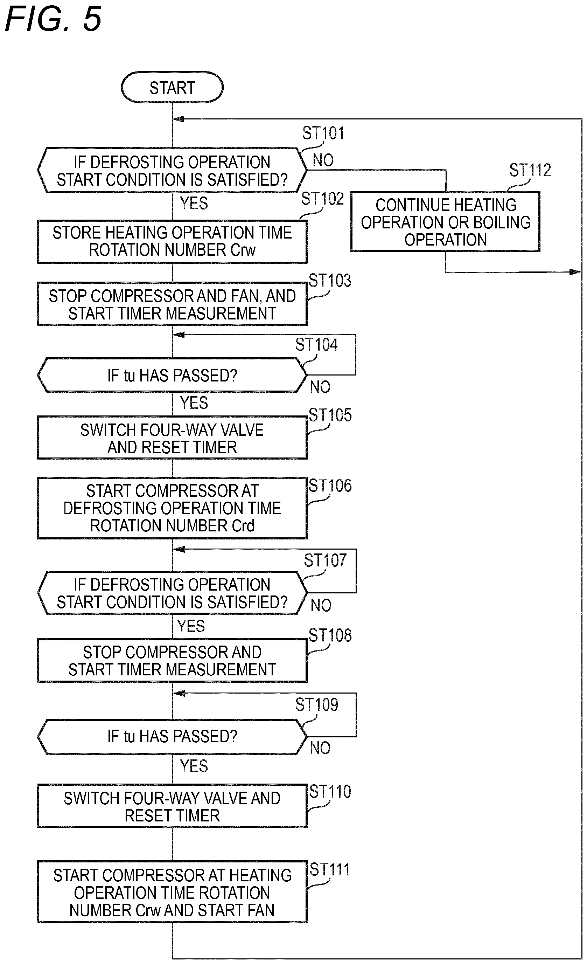

Next, description is given of a second embodiment of the heat pump type heating and hot water supply apparatus of the present invention using Figs. 4 and 5.

Since the structure and operation of the heat pump type heating and hot water supply apparatus of this embodiment are the same as the heat pump type heating and hot water supply apparatus 100 of the first embodiment described above using Fig. 1, the specific description thereof is omitted. In the second embodiment, when resuming the heating or boiling operation after end of the inverse cycle defrosting operation, the resuming time rotation number of the compressor 1 is not determined according to the temperature difference between the forward temperature To at this time and the target forward temperature Tog, but the compressor 1 is driven at the rotation number at the time before execution of the inverse cycle defrosting operation, that is, at the heating operation time rotation number Crw that is the rotation number when the forward temperature To is stable at the target forward temperature Tog, thereby resuming the heating or boiling operation.

By driving the compressor 1 at the heating operation time rotation number Crw to resume the heating or boiling operation in this manner, a rise in the forward temperature To after resumption of the heating or boiling operation can be slackened. Specifically, like the embodiment shown in Fig. 4, at the time t4, by resuming the compressor 1 at the heating operation time rotation number Crw, when compared with driving of the compressor 1 at a high rotation number determined according to the large temperature difference ΔTb1, a rise in the forward temperature To can be slackened. This can prevent the forward temperature To from rising excessively into overshoot. Here, in Fig. 4, signals showing the respective temperatures, signals showing the rotation numbers of the compressor 1, and the meanings of terms such as [heating] and [pressure equalizing] expressing the states of the heat pump type heating and hot water supply apparatus 100 are the same as those of Fig. 2 described in the first embodiment, and thus the specific description thereof is omitted.

Next, using a flow chart shown in Fig. 5, description is given of control to be performed by the control unit 60 in the inverse cycle defrosting operation. The flow chart of Fig. 5 shows the flow of processings mainly relating to the control of the compressor 1 when performing the inverse cycle defrosting operation during the heating or boiling operation of the heat pump type heating and hot water supply apparatus 100 and thereafter resuming the heating or boiling operation. ST shows steps, and numerals following ST show step numbers. Here, in Fig. 5, there are omitted the illustration and description of the control of the heat pump type heating and hot water supply apparatus 100 such as the control of the rotation number of the fan 7 and the control of the opening degrees of the expansion valve 4.

The control unit 60, during the heating or boiling operation, checks whether the defrosting operation start condition is satisfied or not (ST 101). For example, during the heating or boiling operation, it checks whether the temperature of the heat source side heat exchanger detected by the heat exchange temperature sensor 54 after passage of three hours or longer from the previous defrosting operation is lower than 0°C or not. Here, it inputs therein the temperature of the heat source side heat exchanger 5 detected by the heat exchange temperature sensor 54 every specific time (for example, every 30 seconds).

When not satisfied (ST 101 - No), the control unit 60 continues the heating operation or boiling operation (ST 112) and returns the processing to ST101. When satisfied (ST 101 - Yes), it stores the heating operation time rotation number Crw that is a current compressor rotation number Cr (ST 102).

Next, it stops the compressor 1 and fan 7 and starts timer measurement (ST 103).

Next, it checks whether a pressure equalizing time tu has passed since start of the timer measurement in ST 103 or not (ST 104). When not passed (ST 104 - No), it returns the processing to ST 104. When passed (ST 104 - Yes), it switches the four-way valve 2 to switch the refrigerant circuit 10 from a heating cycle to a cooling cycle and resets the timer (ST 105).

Next, it drives the compressor 1 at the defrosting operation time rotation number Crd (ST 106). The defrosting operation time rotation number Crd, in order to shorten the defrosting operation time as much as possible, may preferably be set high, for example, 70 rps. Here, as described above, it controls the compressor 1 to maintain the rotation number Crd during the inverse cycle defrosting operation.

Next, it checks whether the defrosting operation end condition is satisfied or not (ST 107). For example, it checks whether, during the inverse cycle defrosting operation, the temperature of the heat source side heat exchanger 5 input from the heat exchange temperature sensor 54 every specific time becomes 10°C or higher or not.

When not satisfied (ST 107 - No), it returns the processing to ST 107 and continues the inverse cycle defrosting operation. When satisfied (ST 107 - Yes), it stops the compressor 1 and starts the timer measurement (ST 108).

Next, it checks whether the pressure equalizing time tu has passed after start of the timer measurement in ST 108 (ST 109) or not. When not passed (ST 109 - No), it returns the processing to ST 109. When passed (ST 109 - Yes), it switches the four-way valve 2 to return the refrigerant circuit 10 from the cooling cycle to the heating cycle and resets the timer (ST 110).

Next, it drives the compressor 1 at the heating operation time rotation number Crw stored in ST 102 and drives the fan 7 (ST 111), and returns the processing to ST 101.

As described above, the heat pump type heating and hot water supply apparatus 100 of this embodiment, when resuming the heating operation and/or hot water supply operation after the inverse cycle defrosting operation, resumes the compressor at the stored heating operation time rotation number before execution of the defrosting operation, thereby enabling prevention of an excessive rise in the forward temperature.

### [Embodiment 3]

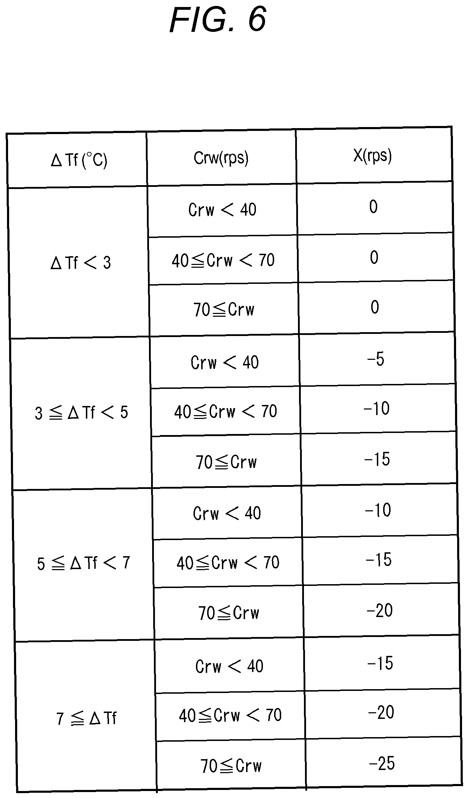

Next, using Figs. 6 to 8, description is given of a third embodiment of the heat pump type heating and hot water supply apparatus of the present invention. Since the structure and operation of the apparatus of this embodiment are the same as the apparatus 100 of the first embodiment described using Fig. 1, the specific description thereof is omitted. In this embodiment, when resuming the heating operation or hot water supply operation after end of the inverse cycle defrosting operation, the compressor 1 is not driven at the heating operation time rotation number Crw that is the rotation number in the heating or boiling operation time before the inverse cycle defrosting operation; but, a temperature difference ΔTf (=Te - Ta) between the temperature of the heat source side heat exchanger 5 (which is hereinafter described as a heat source side heat exchange temperature Te) detected by the heat exchange temperature sensor 54 and the outside air temperature of (which is hereinafter described as an outside air temperature Ta) detected by the outside air temperature sensor 52 is calculated and, the compressor 1 is resumed at a rotation number obtained by correcting the heating operation time rotation number Crw by a correction value X with reference to a rotation number correction table 200 (which is described later).

Firstly, description is given of the rotation number correction table 200 shown in Fig. 6. This table 200 is created according to the results of a test previously conducted or the like and is stored in the control unit 60. In the rotation number correction table 200, correction values X (unit: °C) are determined according to the above-mentioned temperature difference ΔTf (unit: °C) and heating operation time rotation number Crw (unit: rps).

As shown in Fig. 6, the temperature difference ΔTf is divided to four temperature ranges, that is, a range of less than 3°C, a range of 3°C to less than 5°C, a range of 5°C to less than 7°C, and a range of 7°C or more. Also, for the respective four temperature ranges of the temperature difference ΔTf, the heating operation time rotation number Crw is divided to three rotation number ranges, that is, a range of less than 40 rps, a range of 40 rps to less than 70 rps, and a range of 70 rps or more.

When the temperature difference ΔTf is less than 3°C, the correction value X is determined to be 0°C regardless of the range of the heating operation time rotation number Crw. In the respective temperature ranges when the temperature difference ΔTf is 3°C or more, the correction value X is determined to increase in a negative direction as the heating operation time rotation number Crw increases. For example, when the temperature difference ΔTf is 3°C to less than 5°C, for the heating operation time rotation number Crw of 40 rps, the correction value X: -5 rps; for 40 rps to less than 70 rps, the correction value X: -10 rps; and, for 70 rps or more, the correction value X: -15 rps.

Also, when the temperature difference ΔTf is 3°C or more, the correction value X is determined to increase in a negative direction as the temperature difference ΔTf increases. For example, when the heating operation time rotation number Crw in the respective temperature ranges is less than 40 rps, for the temperature difference ΔTf of 3°C or more to less than 5°C, the correction value X: -5 rps; for 5°C or more to less than 7°C, the correction value X: -10 rps; and, for 7°C or more, the correction value X: -15 rps.

As described above, the temperature difference ΔTf is a temperature difference between the heat source side heat exchange temperature Te and outside air temperature Ta. While the heat pump type heating and hot water supply apparatus 100 is performing the heating operation or boiling operation, when the heat source side heat exchange temperature Te of the heat source side heat exchanger 5 functioning as an evaporator is 0°C or lower, the larger the temperature difference ΔTf is, that is, the lower the heat source side heat exchange temperature Te is when compared with the outside air temperature Ta, the larger the amount of frost attached to the heat source side heat exchanger 5 is. Here, when the temperature difference ΔTf is less than 3°C, it is considered that attachment of frost to the heat source side heat exchanger 5 has not occurred.

Meanwhile, as the heating operation time rotation number Crw increases, the pressure lowers. Thus, while the heat pump type heating and hot water supply apparatus 100 is performing the heating or boiling operation, the heat source side heat exchange temperature Te of the heat source side heat exchanger 5 functioning as an evaporator lowers. And, when the heat source side heat exchange temperature Te lowers down to 0°C or lower, the lower the heat source side heat exchange temperature Te is when compared with the then outside air temperature Ta, the larger the amount of frost attached to the heat source side heat exchanger 5 is.

In the rotation number correction table 200, as described above, when the temperature difference ΔTf is less than 3°C, the correction value X is determined to be 0, regardless of the heating operation time rotation number Crw. Also, for the temperature difference ΔTf of 3°C or larger, as the temperature difference ΔTf increases, the correction value X is determined to increase in the negative direction and, as the heating operation time rotation number Crw increases, the correction value X is determined to increase in the negative direction. That is, in the table 200, when attachment of frost to the heat source side heat exchanger 5 has not occurred, the correction value X is determined to be 0 and, as the amount of frost attached to the heat source side heat exchanger 5 increases, the correction value X is determined to increase in the negative direction.

Satisfaction of the defrosting operation start condition during the heating or boiling operation of the heat pump type heating and hot water supply apparatus 100 means that before the time (for example, in Fig. 2(B), time t1) when the defrosting operation start condition is satisfied, frost has attached to the heat source side heat exchanger 5 by an amount corresponding to the temperature difference ΔTf and heating operation time rotation number Crw. The then heating operation time rotation number Crw providing the rotation number of the compressor 1 means the rotation number that, in a state where frost has occurred and the evaporation performance of the heat source side heat exchanger 5 has been lowered, can maintain the forward temperature To at the target forward temperature Tog.

Therefore, like the second embodiment, in resuming the heating operation after end of the inverse cycle defrosting operation, when the compressor 1 is driven at the heating operation time rotation number Crw before execution of the inverse cycle defrosting operation, the evaporation performance of the heat source side heat exchanger 5 is enhanced than before execution of the inverse cycle defrosting operation, since the frost of the heat source side heat exchanger 5 is melted due to execution of the inverse cycle defrosting operation. This causes the forward temperature To to rise excessively and exceed the target forward temperature Tog, thereby incurring a so called forward temperature To overshoot. This raises a fear that excessive heating or boiling operation can occur, thereby lowering the energy-saving property of the apparatus 100.

In view of the above, in the third embodiment of the present invention, differently from the second embodiment, when resuming the heating or boiling operation after end of the inverse cycle defrosting operation, the heating or boiling operation is not resumed by driving the compressor at the heating operation time rotation number Crw before execution of the inverse cycle defrosting operation; but, the heat source side heat exchange temperature Te and outside air temperature Ta respectively detected just before execution of the inverse cycle defrosting operation are taken in together with the heating operation time rotation number Crw before execution of the inverse cycle defrosting operation, the temperature difference ΔTf is calculated and stored, when resuming the heating operation or boiling operation after end of the inverse cycle defrosting operation, referring to the rotation number correction table 200, a correction value X corresponding to the temperature difference ΔTf and heating operation time rotation number Crw is extracted, and the compressor 1 is driven at a rotation number obtained by correcting the heating operation time rotation number Crw using the extracted correction value X.

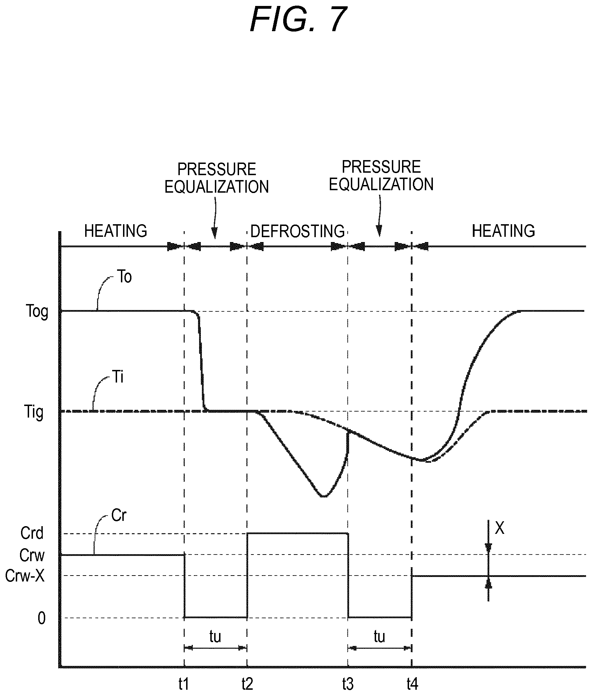

Fig. 7 is a time chart showing the respective time variations in the forward temperature detected by the forward temperature sensor 57, return temperature detected by the return temperature sensor 56 and the rotation number of the compressor 1 when performing the inverse cycle defrosting operation during the heating or boiling operation in this embodiment. Here, the meanings of terms used in Fig. 7, specifically, signs expressing the respective temperatures, signs expressing the rotations numbers of the compressor 1, and terms expressing the states of the heat pump type heating and hot water supply apparatus 100 such as [heating] and [pressure equalizing] are the same as Fig. 2 described in the first embodiment, and thus the specific description thereof is omitted. Also, variations in the forward temperature To, return temperature Ti and compressor rotation number Cr until the time t4 are the same as those until the time t4 in Fig. 2, and thus the specific description thereof is omitted.

As shown in Fig. 7, in this embodiment, at the time t4 when the pressure equalizing processing of the refrigerant circuit 10 is completed, the compressor 1 is driven at the rotation number obtained by correcting the heating operation time rotation number Crw using the correction value X extracted from the rotation number correction table 200, that is, at a rotation number smaller by the absolute value of the correction value X than the heating operation time rotation number Crw. Therefore, since the compressor 1 can be driven at a rotation number obtained by correcting the heating operation time rotation number Crw using the correction value X corresponding to the attached frost amount in the heat source side heat exchanger 5 before execution of the inverse cycle defrosting operation, a rise in the forward temperature To can be slackened further, thereby surely being able to prevent the forward temperature To against excessive rise into overshoot.

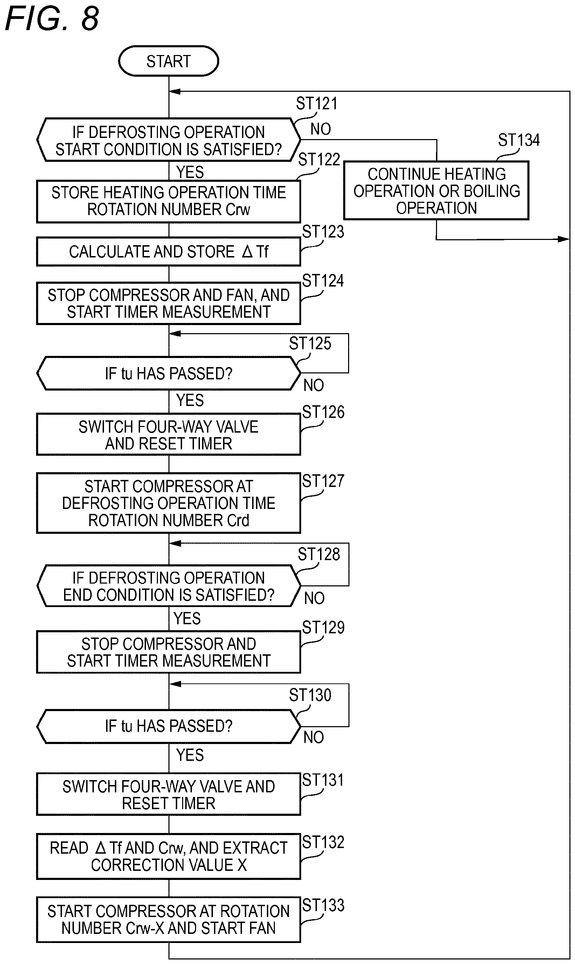

Next, using a flow chart shown in Fig. 8, description is given of control to be performed by the control unit 60 in the inverse cycle defrosting operation time in the third embodiment. The flow chart of Fig. 8 shows mainly the flow of processings relating to the control of the compressor 1 when, after the inverse cycle defrosting operation is executed while the heat pump type heating and hot water supply apparatus 100 is executing the heating or boiling operation, the heating or boiling operation is resumed; and, ST expresses steps, and numerals following ST express step numbers. Here, in Fig. 8, there are omitted the illustration and description of the other control of the apparatus 100 than the control relating to the present invention, such as the rotation number control of the fan 7 and the opening degree control of the expansion valve 4.

The control unit 60, during the heating or boiling operation, checks whether the defrosting operation start condition is satisfied or not (ST 121). For example, the control unit 60, during the heating or boiling operation, checks whether the temperature of the heat source side heat exchanger detected by the heat exchange temperature sensor 54 after passage of three hours or longer from the previous defrosting operation is less than 0°C or not. Here, the control unit 60 inputs therein the temperatures of the heat source side heat exchanger detected by the heat exchange temperature sensor 54 every specific time (for example, every 30 seconds).

When not satisfied (ST 121 - No), the control unit 60 continues the heating or boiling operation (ST 134) and returns the processing to ST121. When satisfied (ST 121 - Yes), it stores the heating operation time rotation number Crw that is the current compressor rotation number Cr (ST 122).

Next, it inputs therein the heat source side heat exchange temperature Te detected by the heat exchange temperature sensor 54 and the outside air temperature Ta detected by the outside air temperature sensor 52, and calculates and stores the temperature difference ΔTf (ST 123). After calculation and storage of the temperature difference ΔTf, it stops the compressor 1 and fan 7, and starts timer measurement (ST 124).

Next, it checks whether the pressure equalizing time tu has passed since start of the timer measurement or not (ST 125). When not passed (ST 125 - No), it returns the processing to ST125. When passed (ST 125 - Yes), it switches the four-way valve 2 to switch the refrigerant circuit 10 from heating cycle to cooling cycle, and resets the timer (ST 126).

Next, it drives the compressor 1 at the defrosting operation time rotation number Crd (ST 127). The defrosting operation time rotation number Crd, in order to shorten the defrosting operation time as much as possible, may be set high, for example, 70 rps. Here, as described above, during the inverse cycle defrosting operation, it controls the compressor 1 to maintain this rotation number Crd.

Next, it checks whether the defrosting operation end condition is satisfied or not (ST 128). For example, during the inverse cycle defrosting operation, it checks whether the temperature of the heat source side heat exchanger 5 input therein from the heat exchange temperature sensor 54 every specific time becomes 10°C or higher or not.

When not satisfied (ST 128 - No), it returns the processing to ST 128 and continues the inverse cycle defrosting operation. When satisfied (ST 128 -Yes), it stops the compressor 1 and starts timer measurement (ST 129).

Next, it checks whether the pressure equalizing time tu has passed since start of the timer measurement in ST 129 or not (ST 130). When not passed (ST 130 - No), it returns the processing to ST 130. When passed (ST 130 -Yes), it switches the four-way valve 2 to return the refrigerant circuit 10 from cooling cycle to heating cycle, and resets the timer (ST 131).

Next, it reads out the temperature difference ΔTf and heating operation time rotation number Cr stored in ST 123 and, referring to the rotation number correction table 200, extracts the correction value X (ST 132); and, it drives the compressor 1 at a rotation number obtained by correcting the read-out heating operation time rotation number Cr using the correction value X and also drives the fan 7 (ST 133), and returns the processing to ST 121.

In this embodiment as well, since the compressor 1 can be driven at the rotation number obtained by correcting the heating operation time rotation number Crw using the correction value X corresponding to the amount of frost attached to the heat source side heat exchanger 5 before execution of the inverse cycle defrosting operation, a rise in the forward temperature To can be slackened still further, thereby being surely able to prevent the forward temperature To from rising excessively into overshoot.

## Claims

1. A heat pump type heating and hot water supply apparatus (100), comprising: a refrigerant circuit (10) including a compressor (1), a flow passage switching device (2), a water refrigerant heat exchanger (3) for exchanging heat between a refrigerant and water and a heat source side heat exchanger (5) connected together sequentially; a hot water supply circuit (12) for circulating hot water between a heating terminal and/or a hot water supply terminal and the water refrigerant heat exchanger (3) by operating a circulation pump (30); and, a control unit (60) for controlling the compressor (1), **characterized in that** the control unit (60) executes any one of the following control (i) and (ii):
(i) During execution of a heating operation by the heating terminal and/or a hot water supply operation by the hot water supply terminal with the refrigerant circuit set for a heating cycle and the compressor (1) driven at a heating operation time rotation number, when a defrosting operation start condition indicating attachment of frost to the heat source side heat exchanger (5) is satisfied, the control unit (60) controls the flow passage switching device (2) to switch the refrigerant circuit (10) to a cooling cycle and drives the compressor (1) at a defrosting operation time rotation number to execute an inverse cycle defrosting operation for defrosting the heat source side heat exchanger (5); during the inverse cycle defrosting operation, when a defrosting operation end condition indicating melting of frost attached to the heat source side heat exchanger (5) is satisfied, the control unit (60) controls the flow passage switching device (2) to return the refrigerant circuit to the heating cycle, and drives the compressor (1) at the smallest rotation number to resume the heating operation and/or the hot water supply operation; and, the control unit (60) continues the driving of the compressor (1) at the smallest rotation number from start of the driving of the compressor (1) at the smallest rotation number until passage of a smallest rotation number maintaining time necessary for a return temperature constituted of the temperature of water flowing into the water refrigerant heat exchanger (3) to rise up to a temperature within a previously set temperature range including a return temperature when the heating operation and/or the hot water supply operation before execution of the inverse cycle defrosting operation were under execution; and,
(ii) During execution of a heating operation by the heating terminal and/or a hot water supply operation by the hot water supply terminal with the refrigerant circuit set for a heating cycle and the compressor (1) driven, when a defrosting operation start condition indicating attachment of frost to the heat source side heat exchanger (5) is satisfied, the control unit (60) stores therein a heating operation time rotation number that is the rotation number of the compressor (1) at the time of satisfaction of the defrosting operation start condition, controls the flow passage switching device (2) to switch the refrigerant circuit to the cooling cycle, drives the compressor (1) at a defrosting operation time rotation number to execute an inverse cycle defrosting operation to defrost the heat source side heat exchanger (5); and, during execution of the inverse cycle defrosting operation, when a defrosting operation end condition indicating melting of frost attached to the heat source side heat exchanger (5) is satisfied, the control unit (60) controls the flow passage switching device (2) to return the refrigerant circuit to the heating operation, and drives the compressor (1) at the heating operation time rotation number stored therein to resume the heating operation and/or the hot water supply operation.

2. The heat pump type heating and hot water supply apparatus according to Claim 1, **characterized in that**, when the control unit (60) executes the (i) control, the smallest rotation number maintaining time is the time necessary for the return temperature to rise up to a return temperature when the heating operation and/or the hot water supply operation were under execution before execution of the inverse cycle defrosting operation.

3. The heat pump type heating and hot water supply apparatus according to Claim 1, **characterized by** a forward temperature detector for detecting a forward temperature that is the temperature of water flowing out from the water refrigerant heat exchanger, wherein the control unit (60), in execution of the (i) control, after passage of the smallest rotation number maintaining time, sets the rotation number of the compressor (1) for a rotation number corresponding to a temperature difference between a target forward temperature corresponding to the target temperature of the heating operation and/or the hot water supply operation and a forward temperature input therein after passage of the smallest rotation number maintaining time.

4. The heat pump type heating and hot water supply apparatus according to Claim 1 or 2, **characterized in that** the control unit (60), in execution of the (i) control, after passage of the smallest rotation number maintaining time, increases the rotation number of the compressor (1) to a rotation number when the heating operation and/or the hot water supply operation before execution of the inverse cycle defrosting operation were under execution.

5. The heat pump type heating and hot water supply apparatus according to Claim 1, **characterized by** a heat exchange temperature detector for detecting a heat source side heat exchange temperature that is the temperature of the heat source side heat exchanger (5), and an outside air temperature detector for detecting an outside air temperature, wherein the control unit (60), in execution of the (ii) control, when the defrosting operation start condition is satisfied, calculates a temperature difference between the heat source side heat exchange temperature detected by the heat exchange temperature detector and the outside air temperature detected by the outside air temperature detector and, using a correction value previously set according to the temperature difference and the heating operation time rotation number, corrects the heating operation time rotation number when resuming the heating operation and/or the hot water supply operation.

## Patentansprüche

1. Wärmepumpenartige Heiz- und Heißwasserversorgungsvorrichtung (100), umfassend :
einen Kühlkreislauf (10), welcher in Reihe geschaltet einen Kompressor (1), eine Strömungsdurchfluss-Schaltvorrichtung (2), einen Wasser-Kühlmittel-Wärmetauscher (3) zu einem Wärmetausch zwischen einem Kühlmittel und Wasser sowie einen wärmequellenseitigen Wärmetauscher (5) aufweist;
einen Heißwasserversorgungskreislauf (12) zu einer Zirkulation von heißem Wasser zwischen einem Heizendgerät und/oder einem Heißwasserversorgungsendgerät und dem Wasser-Kühlmittel-Wärmetauscher (3) durch Betreiben einer Umwälzpumpe (30); sowie
eine Steuereinheit (60) zur Steuerung des Kompressors (1),
**dadurch gekennzeichnet, dass** die Steuereinheit (60) eine der folgenden Steuerungen (i) und (ii) ausführt:
(i) falls, während durch das Heizendgerät eine Heizoperation und/oder durch das Heißwasserversorgungsendgerät eine Heißwasserversorgungsoperation durchgeführt werden/wird, wobei der Kühlkreislauf (10) für einen Heizzyklus eingestellt ist und der Kompressor (1) mit einer Heizoperationsdrehzahl angetrieben wird, eine Abtauoperations-Startbedingung, welche ein Vorhandensein von Frost an dem wärmequellenseitigen Wärmetauscher (5) anzeigt, erfüllt ist, steuert die Steuereinheit (60) die Strömungsdurchfluss-Schaltvorrichtung (2) so, dass diese den Kühlkreislauf (10) auf einen Kühlzyklus schaltet, und sie treibt den Kompressor (1) mit einer Abtauoperationsdrehzahl so an, dass eine Inverszyklus-Abtauoperation ausgeführt wird, um den wärmequellenseitigen Wärmetauscher (5) zu entfrosten;
falls während der Inverszyklus-Abtauoperation eine Abtauoperations-Endbedingung, welche ein Schmelzen von Frost an dem wärmequellenseitigen Wärmetauscher (5) anzeigt, erfüllt ist, steuert die Steuereinheit (60) die Strömungsdurchfluss-Schaltvorrichtung (2) so, dass sie den Kühlkreislauf (10) in den Heizzyklus zurückschaltet, und die Steuereinheit (60) treibt den Kompressor (1) mit der minimalen Drehzahl an, so dass die Heizoperation und/oder die Heißwasserversorgungsoperation wieder aufgenommen werden/wird;
und die Steuereinheit (60) fährt damit fort, den Kompressor (1) mit der minimalen Drehzahl ab dem Start des Antreibens des Kompressors (1) mit der minimalen Drehzahl anzutreiben, bis ein Zeitraum des Aufrechterhaltens der minimalen Drehzahl vergangen ist, welcher erforderlich ist, damit eine als Temperatur des in den Wasser-Kühlmittel-Wärmetauschers (3) strömenden Wassers ausgebildete Ausgabetemperatur auf eine Temperatur in einem vorgegebenen Temperaturbereich ansteigen kann, wobei der vorgegebene Temperaturbereich eine Ausgabetemperatur umfasst für den Fall, dass die Heizoperation und/oder die Heißwasserversorgungsoperation vor der Ausführung der Inverszyklus-Abtauoperation durchgeführt würden/würde; und
(ii) falls während einer Ausführung einer Heizoperation durch das Heizendgerät und/oder während einer Heißwasserversorgungsoperation durch das Heißwasserversorgungsendgerät, wobei der Kühlkreislauf (10) auf einen Heizzyklus eingestellt ist und der Kompressor (1) angetrieben wird, eine Abtauoperations-Startbedingung erfüllt ist, welche ein Vorkommen von Frost an dem wärmequellenseitigen Wärmetauscher (5) anzeigt,
speichert die Steuereinheit (60) eine Heizoperationsdrehzahl, welche der Drehzahl des Kompressors (1) zu einem Zeitpunkt entspricht, in welchem die Abtauoperations-Startbedingung erfüllt ist,
steuert die Steuereinheit (60) die Strömungsdurchfluss-Schaltvorrichtung (2) so, dass diese den Kühlkreislauf (10) in den Kühlzyklus schaltet,
treibt die Steuereinheit (60) den Kompressor (1) mit einer AbtauoperationsDrehzahl an, damit eine Inverszyklus-Abtauoperation durchgeführt wird, um den wärmequellenseitigen Wärmetauscher (5) zu entfrosten; und
falls während einer Ausführung der Inverszyklus-Abtauoperation eine Abtauoperations-Endbedingung erfüllt ist, welche ein Schmelzen von Frost an dem wärmequellenseitigen Wärmetauscher (5) anzeigt, steuert die Steuereinheit (60) die Strömungsdurchfluss-Schaltvorrichtung (2) so, dass sie den Kühlkreislauf (10) auf die Heizoperation zurückschaltet, und treibt den Kompressor (1) mit der gespeicherten Heizoperationsdrehzahl so, dass die Heizoperation und/oder die Heißwassserversorgungsoperation wieder aufgenommen werden/wird.

2. Die wärmepumpenartige Heiz- und Heißwasserversorgungsvorrichtung (100) nach Anspruch 1, **dadurch gekennzeichnet, dass,** wenn die Steuereinheit (60) die Steuerung (i) ausführt, der Zeitraum des Aufrechterhaltens der minimalen Drehzahl dem Zeitraum entspricht, welcher erforderlich ist, damit die Ausgabetemperatur auf eine Ausgabetemperatur des Falls, dass die Heizoperation und/oder die Heißwasserversorgungsoperation vor Ausführung der Inverszyklus-Abtauoperation ausgeführt werden/wird, steigen kann.

3. Die wärmepumpenartige Heiz- und Heißwasserversorgungsvorrichtung (100) nach Anspruch 1, **gekennzeichnet durch** einen Vorlauftemperatursensor zur Detektion einer Vorlauftemperatur, welche die Temperatur von aus dem Wasser-Kühlmittel-Wärmetauscher (3) fließendem Wasser ist, wobei die Steuereinheit (60), wenn sie die Steuerung (i) ausführt, nach Ablauf des Zeitraums des Aufrechterhaltens der minimalen Drehzahl die Drehzahl des Kompressors (1) auf eine Drehzahl einstellt, welche einer Temperaturdifferenz zwischen einer der Soll-Temperatur der Heizoperation und/oder der Heißwasserversorgungsoperation entsprechenden Soll-Vorlauftemperatur und einer nach Ablauf des Zeitraums des Aufrechterhaltens der minimalen Drehzahl eingegebenen Vorlauftemperatur entspricht.

4. Die wärmepumpenartige Heiz- und Heißwasserversorgungsvorrichtung (100) nach Anspruch 1 oder 2, **dadurch gekennzeichnet, dass** die Steuereinheit (60), wenn sie die Steuerung (i) ausführt, nach Ablauf des Zeitraums des Aufrechterhaltens der minimalen Drehzahl die Drehzahl des Kompressors (1) auf eine Drehzahl des Falls, wenn die Heizoperation und/oder die Heißwasserversorgungsoperation vor Ausführung der Inverszyklus-Abtauoperation ausgeführt werden/wird, erhöht.

5. Die wärmepumpenartige Heiz- und Heißwasserversorgungsvorrichtung (100) nach Anspruch 1, **gekennzeichnet durch** einen Wärmetauschtemperatursensor zur Detektion einer wärmequellenseitigen Wärmetauschtemperatur, welche die Temperatur des wärmequellenseitigen Wärmetauschers (5) ist, und einen Umgebungslufttemperatursensor zur Detektion einer Umgebungslufttemperatur,
wobei die Steuereinheit (60), wenn sie die Steuerung (ii) ausführt, wenn die Abtauoperations-Startbedingung erfüllt ist,
eine Temperaturdifferenz zwischen der durch den Wärmetauschtemperatursensor detektierten wärmequellenseitigen Wärmetauschtemperatur und der durch den Umgebungslufttemperatursensor detektierten Umgebungslufttemperatur berechnet und, unter Verwendung eines zuvor abhängig von der Temperaturdifferenz und der Heizoperationsdrehzahl eingestellten Korrekturwerts, die Heizoperationsdrehzahl korrigiert, wenn die Heizoperation und/oder die Heißwasserversorgungsoperation wieder aufgenommen werden/wird.

## Revendications

1. Dispositif de type pompe à chaleur pour chauffage et pour alimentation en eau chaude (100), comprenant un circuit réfrigérant (10) avec un compresseur (1), un dispositif commutateur de passage d'écoulement (2), un échangeur de chaleur eau-réfrigérant (3) pour échanger de chaleur entre un réfrigérant et l'eau et un échangeur de chaleur côté source thermique (5), lesquels sont raccordés ensemble séquentiellement ; un circuit d'alimentation en eau chaude (12) pour circuler de l'eau chaude, opérant une pompe de circulation (30), entre un terminal de chauffage et/ou un terminal d'alimentation en eau chaude et l'échangeur de chaleur eau-réfrigérant (3) ; et une unité de commande (60) pour contrôler le compresseur (1), **caractérisé en ce que** l'unité de commande (60) réalise l'une ou l'autre des commandes suivants (i) et (ii) :
(i) Pendant la réalisation d'une opération de chauffage par le terminal de chauffage et/ou d'une opération d'alimentation en eau chaude par le terminal d'alimentation en eau chaude, avec le circuit réfrigérant (10) étant ajusté pour un cycle de chauffage et le compresseur (1) étant entraîné avec une vitesse de rotation d'opération de chauffage, si une condition de départ d'opération refroidissant, indiquant de gelée attachée à l'échangeur de chaleur côté source thermique (5), soit satisfaite, l'unité de commande (60) fait le dispositif commutateur de passage d'écoulement (2) commuter le circuit réfrigérant (10) en cycle réfrigérant et entraîne le compresseur (1), avec une vitesse de rotation d'opération décongelant, à exécuter une opération décongelant à cycle inverse pour décongeler l'échangeur de chaleur côté source thermique (5) ;
pendant l'opération décongelant à cycle inverse, si une condition finale d'opération décongelant, indiquant une fonte de la gelée attachée à l'échangeur de chaleur côté source thermique (5), soit satisfaite, l'unité de commande (60) fait le dispositif commutateur de passage d'écoulement (2) retourner le circuit réfrigérant (10) au cycle de chauffage et entraîne le compresseur (1) avec une vitesse de rotation minimale pour résumer l'opération de chauffage et/ou l'opération d'alimentation en eau chaude ;
et l'unité de commande (60) continue à entraîner le compresseur (1) avec la vitesse de rotation minimale, du commencement de l'entraînement du compresseur (1) avec la vitesse de rotation minimale jusqu'à ce qu'un temps pour maintenir la vitesse minimale de rotation aie passé, lequel temps étant requis pour qu'une température résultante, constituée par la température de l'eau coulant dans l'échangeur de chaleur eau-réfrigérant (3), monte à une température dans un intervalle prédéterminé incluant une température résultante en cas que l'opération de chauffage et/ou l'opération d'alimentation en eau chaude soient/soit exécutées/exécutée avant d'une exécution de l'opération décongelant à cycle inverse ; et
(ii) Pendant l'exécution d'une opération de chauffage par le terminal de chauffage et/ou d'une opération d'alimentation en eau chaude par le terminal d'alimentation en eau chaude, avec le circuit réfrigérant (10) étant ajusté pour un cycle de chauffage et le compresseur (1) étant entraîné, si une condition de départ d'opération décongelant, indiquant une gelée attachée à l'échangeur de chaleur côté source thermique (5), soit satisfaite,
l'unité de commande (60) stocke là-dedans une vitesse de rotation d'opération de chauffage, laquelle est la vitesse de rotation du compresseur (1) au temps de satisfaction de la condition de départ d'opération décongelant,
l'unité de commande (60) contrôle le dispositif commutateur de passage d'écoulement (2) pour commuter le circuit réfrigérant (10) en cycle de refroidissement,
l'unité de commande (60) entraîne le compresseur (1) avec une vitesse de rotation d'opération décongelant pour exécuter une opération décongelant à cycle inverse pour le bût d'une décongélation de l'échangeur de chaleur côté source thermique (5) ; et
pendant une exécution de l'opération décongelant à cycle inverse, si une condition finale d'opération décongelant, indiquant une fonte de la gelée attachée à l'échangeur de chaleur côté source thermique (5) soit satisfaite, l'unité de commande (60) fait le dispositif commutateur de passage d'écoulement (2) retourner le circuit réfrigérant (10) à l'opération de chauffage et entraîne le compresseur (1) avec la vitesse de rotation d'opération de chauffage stockée là-dedans pour résumer l'opération de chauffage et/ou l'opération d'alimentation en eau chaude.

2. Dispositif de type pompe à chaleur pour chauffage et pour alimentation en eau chaude (100) selon la revendication 1, **caractérisé en ce que**, si l'unité de commande (60) exécute le commande (i), le temps pour maintenir la vitesse de rotation minimale est le temps requis pour que la température résultante monte à une température résultante en cas que l'opération de chauffage et/ou l'opération d'alimentation en eau chaude soient/soit exécutées/exécutée avant d'une exécution de l'opération décongelant à cycle inverse.

3. Dispositif de type pompe à chaleur pour chauffage et pour alimentation en eau chaude (100) selon la revendication 1, **caractérisé par** un capteur de température amont pour capturer une température amont étant la température de l'eau écoulant de l'échangeur de chaleur eau-réfrigérant (3), l'unité de commande (60) déterminant, en exécution du contrôle (i), après le passage du temps pour maintenir la vitesse de rotation minimale, la vitesse de rotation du compresseur (1) pour une vitesse de rotation correspondant à une différence de température entre
une température amont prescrite, laquelle corresponde à la température préscrite de l'opération de chauffage et/ou de l'opération d'alimentation en eau chaude, et une température amont donnée là-dedans après le passage du temps pour maintenir la vitesse de rotation minimale.

4. Dispositif de type pompe à chaleur pour chauffage et pour alimentation en eau chaude (100) selon la revendication 1 ou 2, **caractérisé en ce que** l'unité de commande (60), en exécutant la contrôle (i), après le passage du temps pour maintenir la vitesse de rotation minimale, fait monter la vitesse de rotation du compresseur (1) à une vitesse de rotation en cas que l'opération de chauffage et/ou l'opération d'alimentation soient/soit exécutées/exécutée avant de l'exécution de l'opération décongelant à cycle inverse.

5. Dispositif de type pompe à chaleur pour chauffage et pour alimentation en eau chaude (100) selon la revendication 1, **caractérisé par** un capteur d'un échange de chaleur pour capturer une température d'échange de chaleur côté source thermique, laquelle est la température de l'échangeur de chaleur côté source thermique (5), et un capteur de température de l'air extérieur pour capturer une température de l'air extérieur,
l'unité de commande (60), en exécution du commande (ii), si la condition de départ d'opération décongelant soit satisfaite, calculant une différence de température entre la température d'échange de chaleur côté source thermique, capturée par le capteur de température d'un échange de chaleur, et la température de l'air extérieur, capturée par le capteur de température de l'air extérieur,
et, par usage d'une valeur corrective prédéterminée selon la différence de température et la vitesse de rotation d'opération de chauffage, corrigeant la vitesse de rotation d'opération de chauffage quand l'opération de chauffage et/ou l'opération d'alimentation en eau chaude sont/est résumées/résumée.
